# EUROPEAN PATENT APPLICATION

(11) **EP 4 582 307 A1**
(43) Date of publication of application: **09.07.2025**
(21) Application number: 24752687.4
(22) Date of filing: 22.01.2024
(51) Int. Cl.: B60N 2/16, B60N 2/22, B60N 2/02

(54) **LIFTING MECHANISM OF SEAT, SEAT AND VEHICLE**

(30) Priority: 09.02.2023 CN 202310152437
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: CHENG, Hao, Ningbo, Zhejiang 315899 (CN); YANG, Dacheng, Ningbo, Zhejiang 315899 (CN); JIANG, Xiaoyuan, Ningbo, Zhejiang 315899 (CN); QIU, Deping, Ningbo, Zhejiang 315899 (CN); WU, Gang, Ningbo, Zhejiang 315899 (CN); GAO, Jian, Ningbo, Zhejiang 315899 (CN); LI, Zhifan, Ningbo, Zhejiang 315899 (CN); ZHANG, Tiancheng, Ningbo, Zhejiang 315899 (CN); FENG, Jiangping, Ningbo, Zhejiang 315899 (CN); YU, Shiqing, Ningbo, Zhejiang 315899 (CN); XIA, Xuanjun, Ningbo, Zhejiang 315899 (CN)
(74) Representative: Michalski Hüttermann & Partner Patentanwälte mbB
(86) International application number: PCT/CN2024/073432
(87) International publication number: WO 2024/164830

(57) **Abstract**

A lifting mechanism for a seat, a seat and a vehicle. The lifting mechanism for the seat includes: a fixing frame (l); a seat frame (2), including a front end rotatably connected to the fixing frame (l); and a drive assembly (3), installed to the fixing frame (1) and configured to drive the seat frame (2) to rotate around the front end. When a driver seat has been adjusted to a suitable position for a front-and-rear distance and then the height of the seat is adjusted, since the height of the seat is adjusted in such a way that a height of the front end of the seat frame (2) is maintained unchanged and a rear end of the seat frame (2) rotates around the front end of the seat frame (2) so as to achieve increase or decrease in the height, the distance between the front end of the seat frame (2) and a vehicle body is maintained unchanged even if the seat is raised or lowered, that is, there is no need to adjust the seat forward or backward anymore.

## Description

### TECHNICAL FIELD

This disclosure relates to the field of vehicle technology, and particularly to a lifting mechanism for a seat, a seat, and a vehicle.

### BACKGROUND

For drivers, a good driving position can effectively alleviate driving fatigue, and improve driving comfort and safety.

Driver seats in existing vehicles often have front-and-rear adjustment functions and height adjustment functions. The front-and-rear adjustment functions mainly serve to adjust a distance between arms and a steering wheel, thus making it convenient for people to operate the steering wheel, and to adjust a distance between legs and a clutch, thus making it convenient for people to operate the clutch. The height adjustment functions mainly serve to adjust a height of the seat, facilitating people to have a suitable field of vision while driving.

However, for people with small stature, to ensure the driving safety, they often have to adjust the seat upward to obtain a suitable field of vision, which, however, increases the distance between the legs and the clutch. Therefore, the seat needs to be adjusted forward to facilitate operation of the clutch. However, this leads to a shorter distance between people and the steering wheel, which, on one hand, results in a poor driving position for a driver, thus making the driver prone to driving fatigue, and on the other hand, results in a potential safety risk in the event of a traffic accident.

### SUMMARY

This disclosure provides a lifting mechanism for a seat, a seat, and a vehicle, so as to solve at least part of the problems in the related art.

According to a first aspect of this disclosure, there is provided a lifting mechanism for a seat, which includes a fixing frame, a seat frame, and a drive assembly. The seat frame includes a front end. The front end is rotatably connected to the fixing frame. The drive assembly is installed to the fixing frame and is configured to drive the seat frame to rotate around the front end.

Optionally, the seat frame includes a seating frame and a backrest frame. The front end is located at an end of the seating frame away from the backrest frame. The seating frame further includes a rear end opposite to the front end, and the rear end is configured to be connected with the backrest frame.

The drive assembly is connected to the rear end or the backrest frame.

Optionally, the seat frame further includes a rotating shaft located at the front end. The rotating shaft extends along a width direction of the lifting mechanism for the seat. The rotating shaft is fixedly connected to one of the seat frame and the fixing frame, and is rotatably connected to the other of the seat frame and the fixing frame.

Optionally, the drive assembly includes a drive motor, a first transmission component, and a second transmission component for connecting with the seat frame. The second transmission component is disposed around the first transmission component and is drivably connected with the first transmission component. The drive motor is installed to the fixing frame and is configured to drive the first transmission component to rotate, such that the second transmission component moves along the first transmission component and drives the seat frame to rotate around the front end.

Optionally, the lifting mechanism for the seat further includes a connecting rod. Both ends of the connecting rod are fixedly connected to the seat frame. The second transmission component is fixedly connected to the connecting rod.

Optionally, the lifting mechanism for the seat includes two sets of drive assemblies. The two sets of drive assemblies are sequentially distributed along a width direction of the lifting mechanism for the seat, and the first transmission components of the two sets of drive assemblies are distributed parallel to each other, and the second transmission components of the two sets of drive assemblies are fixedly connected to the both ends of the connecting rod, respectively.

Optionally, the first transmission component includes an external thread, and the second transmission component includes an internal thread matching the external thread. The external thread is in clearance fit with the internal thread to provide a space for the second transmission component to deflect.

Optionally, the connecting rod includes an installation cavity and an installation hole intersecting each other. The installation hole is configured for the first transmission component to pass through the connecting rod. The second transmission component is fixedly installed within the installation cavity.

Optionally, the lifting mechanism further includes an auxiliary component within the installation cavity; the auxiliary component is fixedly connected to the second transmission component; the connecting rod includes a positioning hole; and the auxiliary component includes a positioning protrusion matching the positioning hole.

Optionally, the auxiliary component further includes side walls in contact with the connecting rod and a bottom wall connected to the side walls; the second transmission component is located between the side walls and against the bottom wall; and the positioning protrusion is located on the side walls.

Optionally, the side walls include an upper side wall, a lower side wall, and a gap between the upper side wall and the lower side wall; and the gap is configured for the upper side wall and the lower side wall to approach each other.

Optionally, the positioning protrusion and the side walls have a smooth transition therebetween.

Optionally, the seat frame includes a backrest frame. An angle B is formed between an extension direction of the backrest frame and an extension direction of the first transmission component, where the angle B is greater than or equal to 0° and less than or equal to 3°.

Optionally, the drive assembly further includes a limiter. The limiter is located at an end of the first transmission component to limit a movement distance of the second transmission component on the first transmission component.

According to a second aspect of this disclosure, there is provided a seat, which includes a seating component and a backrest component. The seat further includes the lifting mechanism for the seat as described above. The seating component and the backrest component cooperate to encase the lifting mechanism for the seat.

According to a third aspect of this disclosure, there is provided a vehicle, which includes a main body. The vehicle further includes the lifting mechanism for the seat as described above. The seat is installed on the main body.

The technical solutions provided by the embodiments of this disclosure can include the following beneficial effects.

When a height of a driver seat is adjusted in the case that the driver seat has been adjusted to a suitable position for a front-and-rear distance, since the height of the seat is adjusted in such a way that a height of the front end of the seat frame is maintained unchanged and the rear end of the seat frame rotates around the front end of the seat frame so as to achieve increase or decrease in the height, it is ensured that even if the seat is raised or lowered, a distance between the front end of the seat frame and the clutch or the vehicle body remains unchanged, that is, there's no need to adjust the seat forward anymore. In this way, the driver's needs for the field of vision, the distance between the driver and the steering wheel, and the distance between the driver and the clutch or the vehicle body can be met simultaneously.

Secondly, since the seat is adjusted in height by rotating, the backrest component of the seat frame will also rotate, and thus not only the height adjustment of the seat but also the adjustment of the backrest can be achieved by using a drive assembly. The seat has a simple structure and a reduced weight, which is in line with lightweight goals of modern vehicles, especially new energy vehicles.

Finally, since the seat is adjusted in height by rotating, instead of directly driving the seat up and down, an output torque of the drive motor is reduced. In other words, a volume of the drive motor is reduced, which is beneficial for distribution of space inside the vehicle.

It should be understood that the general description above and the detailed description below are exemplary and explanatory only, and are not intended to limit this disclosure.

### BRIEF DESCRIPTION OF DRAWINGS

The drawings herein, which are incorporated into and constitute a part of this specification, illustrate embodiments consistent with the present disclosure and are used in conjunction with the specification to explain the principles of the present disclosure.
FIG. 1 is a schematic structural diagram of a lifting mechanism for a seat according to an exemplary embodiment of the present disclosure.
FIG. 2 is a schematic diagram illustrating movement of a lifting mechanism for a seat according to an exemplary embodiment of the present disclosure, where solid lines represent an initial position of the lifting mechanism for the seat, and dashed lines represent a changed position of the lifting mechanism for the seat.
FIG. 3 is a cross-sectional view of the lifting mechanism for the seat in FIG. 2 of the present disclosure along line A-A.

Description of reference numerals: 1-fixing frame; 2-seat frame; 3-drive assembly; 20-seating frame; 21-backrest frame; 22-rotating shaft; 10-left column; 11-right column; 12-fixing bracket; 30-drive motor; 31-first transmission component; 32-second transmission component; 4-connecting rod; 40-installation cavity; 41-installation hole; 42-positioning hole; 33-limiter; 5-auxiliary component; 50-upper side wall; 51-lower side wall; 52-bottom wall; 53-positioning protrusion.

### DETAILED DESCRIPTION

Reference will now be made in detail to exemplary embodiments, examples of which are illustrated in the accompanying drawings. When the following description refers to the drawings, the same numerals in different drawings indicate the same or similar elements, unless otherwise indicated. Embodiments described in the following exemplary embodiments are not intended to be representative of all embodiments consistent with the present disclosure. Rather, they are merely examples of devices and methods consistent with some aspects of the present disclosure as detailed in the appended claims.

Terminology used herein is for the purpose of describing particular embodiments only, and is not intended to be limiting of the present disclosure. Unless otherwise defined, technical or scientific terms used herein shall have their ordinary meanings as understood by a person of ordinary skill in the art to which the present disclosure pertains. Terms "first," "second," and the like as used in the specification and claims of the present disclosure do not imply any order, quantity, or importance, but are merely used to distinguish one component from another. Similarly, terms "a" or "an" and the like do not denote a limitation on quantity, but rather denote the presence of at least one. "A plurality of" or "multiple" means two or more. Unless otherwise indicated, terms "front," "rear," "lower," and/or "upper" and the like are for convenience of description only, and are not limited to a position or a spatial orientation. Terms "including" or "comprising" and the like are intended to mean that elements or items appearing before "including" or "comprising" encompass elements or items listed after "including" or "comprising" and equivalents thereof, without excluding other elements or items. Terms "connected" or "coupled" and the like are not limited to physical or mechanical connections, but may include electrical connections, whether direct or indirect.

Terminology used herein is for the purpose of describing particular embodiments only, and is not intended to be limiting of the present disclosure. As used in the present disclosure and the appended claims, the singular forms of "a," "an," and "the" are intended to include plural forms as well, unless the context clearly dictates otherwise. It should also be understood that the term "and/or" as used herein refers to and includes any or all possible combinations of one or more of the associated listed items.

This disclosure provides a vehicle, which can be a new energy vehicle or a traditional fuel vehicle, or can be a passenger vehicle or a cargo vehicle, which is not limited in this disclosure. The vehicle includes a main body, a cab provided on the main body, and a driver seat provided in the cab. The driver seat can be separately used, manufactured, sold, imported or licensed for sale, which is not limited in this disclosure.

The driver seat generally has a height adjustment function and a front-and-rear adjustment function, to meet people's comprehensive needs for the field of vision and operation of a clutch and a steering wheel. However, for people with small stature, the needs for the field of vision and operation of the clutch are often met at the expense of maintaining an appropriate distance between people and the steering wheel, which can lead to potential safety hazards.

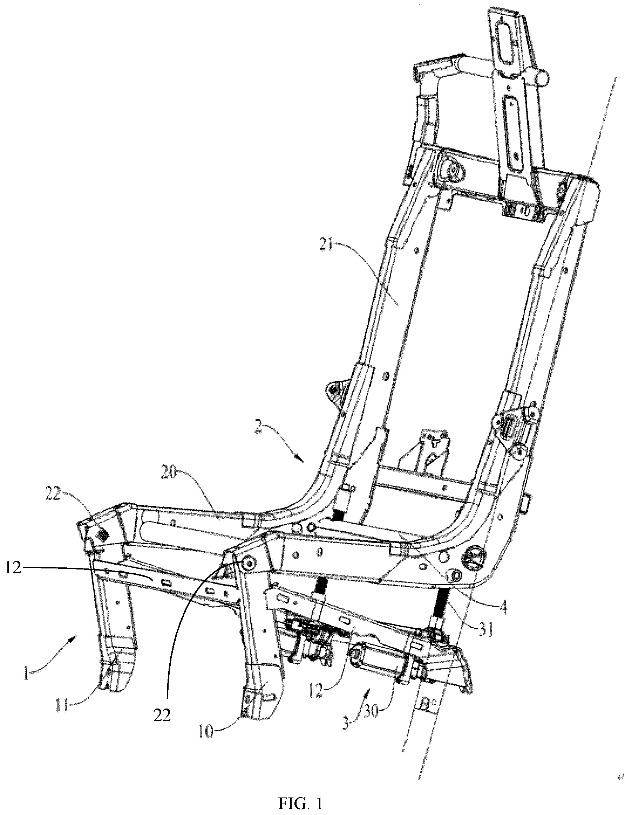

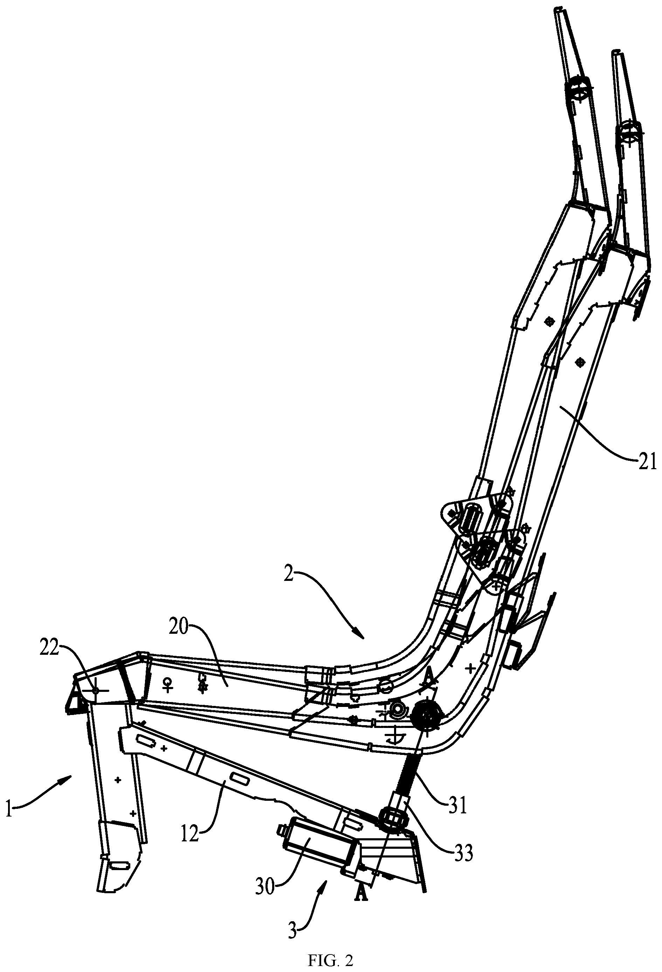

In some embodiments, the driver seat includes a seating component for carrying a weight of human body, a backrest component for the human body to lean on, a filler component (not shown in the drawings), and a lifting mechanism for the seat as shown in FIG. 1 and FIG. 2. The lifting mechanism for the seat includes a fixing frame 1 installed to the main body, a seat frame 2, and a drive assembly 3. The seating component and the backrest component are generally made of a flexible material, such as leather and cloth, and are used to encase the seat frame 2. The filler component, such as sponges, are located between the backrest component and the lifting mechanism for the seat, and between the seating component and the lifting mechanism for the seat, to ensure softness and comfort of the driver seat. The seat frame 2 includes a front end. The front end is rotatably connected to the fixing frame 1. The drive assembly 3 is installed to the fixing frame 1 and is used to drive the seat frame 2 to rotate around the front end of the seat frame 2. Referring to FIG. 2, the lifting mechanism for the seat rotates upward from an initial position (indicated by solid lines) to a changed position (indicated by dashed lines), from which it can be clearly seen that a height of the front end of the seat frame remains unchanged and a rear part of the seat frame rises. In this way, when the height of the driver seat is adjusted in the case that the seat has been adjusted to a suitable position for a front-and-rear distance, since the height of the seat is adjusted in such a way that a height of the front end of the seat frame 2 is maintained unchanged and the rear end of the seat frame 2 rotates around the front end of the seat frame 2 so as to achieve increase or decrease in the height, it is ensured that even if the seat is raised, the distance between the front end of the seat frame 2 and the clutch remains unchanged, that is, there's no need to adjust the seat forward anymore. In this way, the driver's needs for the field of vision, the distance between the driver and the steering wheel, and the distance between the driver and the clutch can be met simultaneously.

Secondly, since the seat is adjusted in height by rotating, the backrest component of the seat frame 2 will also rotate, and thus not only the height adjustment of the seat but also the adjustment of the backrest can be achieved by using a drive assembly. The seat has a simple structure and a weight reduction by about 6kg, which is in line with lightweight goals of modern vehicles, especially new energy vehicles.

Finally, since the seat is adjusted in height by rotating, instead of directly driving the seat up and down, an output torque of the drive motor 30 is reduced. In other words, a volume of the drive motor 30 is reduced, which is beneficial for distribution of space inside the vehicle.

It should be noted that the lifting mechanism for the seat in this disclosure can be separately used, manufactured, sold, imported or licensed for sale, which is not limited in this disclosure.

With continued reference to FIG. 1, the seat frame 2 includes a seating frame 20 and a backrest frame 21. The seat frame 2 can be fixedly or rotatably connected to the backrest component, which is not limited in this disclosure. The front end is located at an end of the seating frame 20 away from the backrest frame 21. The seating frame 20 further includes a rear end opposite to the front end, and the rear end is used to be connected with the backrest frame 21. When the rear end is fixedly connected to the backrest component, the drive assembly 3 can be connected to the rear end or the backrest frame 21. When the rear end is rotatably connected to the backrest component, the drive assembly 3 is connected to the rear end. In this way, in the case of the same load on the seat, because a connection point between the drive assembly 3 and the seat frame 2 is away from a rotation point of the seat frame 2, the drive assembly 3 can rotate the seat frame 2 with a smaller driving torque, that is, a small-sized drive assembly 3 can be selected, thus saving the space inside the vehicle and saving costs.

With continued reference to FIG. 1 and FIG. 2, as an optional embodiment, the seat frame 2 further includes a rotating shaft 22 located at the front end. The rotating shaft 22 extends along a width direction of the lifting mechanism for the seat. The rotating shaft 22 is fixedly connected to the seat frame 2 and is rotatably connected to the fixing frame 1. In this way, the lifting mechanism for the seat has a simple structure and is easy to achieve. However, in other embodiments, the rotating shaft 22 can be fixedly connected to the fixing frame 1 and rotatably connected to the seat frame 2, which is not limited in this disclosure.

As shown in FIG. 1, in some embodiments, the fixing frame 1 includes a left column 10 and a right column 11 installed on the main body, and a fixing bracket 12 installed on the left column 10 and the right column 11. Top ends of the left column 10 and the right column 11 are articulatedly connected with the seating frame 20 through swivel joints. The drive assembly 3 is installed on the fixing bracket 12. This ensures stability of installation of the drive assembly 3.

As shown in FIGS. 1 to 3, as an optional embodiment, the drive assembly 3 includes a drive motor 30, a first transmission component 31, and a second transmission component 32 for connection with the seat frame 2. The first transmission component 31 is a lead screw, and the second transmission component 32 is a nut, where the second transmission component 32 is disposed around the first transmission component 31 and is drivably connected to the first transmission component 31. The drive motor 30 is installed on the fixing frame 1 and is used to drive the first transmission component 31 to rotate around a center axis of the first transmission component 31, such that the second transmission component 32 moves along the first transmission component 31 and drives the seat frame 2 to rotate around the front end of the seat frame 2. In this way, on one hand, it can be very convenient to achieve lifting of the seat frame 2 by rotating the seat frame 2 through the drive motor 30; and on the other hand, when the rear end is fixedly connected to the backrest component, electric adjustment of the seating frame 20 and the backrest frame 21 can be achieved with a single touch by pressing a switch of the drive assembly 3.

In particular, in this disclosure, the lifting mechanism for the seat includes two sets of drive assemblies 3. The two sets of drive assemblies 3 are sequentially distributed along a width direction of the seating frame 20. Two drive motors 30 are respectively located at left and right ends of the fixing bracket 12. The first transmission components 31 of the two sets of drive assemblies 3 are distributed parallel to each other. The second transmission components 32 of the two sets of drive assemblies 3 are respectively connected to the seat frame 2. Through connection between the two second transmission components 32 and the seat frame, the stability of the lifting mechanism for the seat during rotation is ensured.

It should be noted that the columns, the fixing bracket 12, the seat frame 2, and the lead screw in this disclosure cooperate to form a four-link mechanism. To ensure smooth operation of the four-link mechanism, as an optional embodiment, the first transmission component 31 includes an external thread, and the second transmission component 32 includes an internal thread matching the external thread. The external thread is in clearance fit with the internal thread to provide a space for the second transmission component 32 to deflect. The second transmission component 32 is connected to the seat frame 2 on one hand, and connected to the first transmission component 31 on the other hand. When the drive motor 30 operates, the second transmission component 32 will move axially along the first transmission component 31, and at the same time, the second transmission component 32 will rotate along with the seat frame 2, which leads to a conflict in the movement of the second transmission component 32 itself. Therefore, the first transmission component 31 is in clearance fit with the second transmission component 32 in this disclosure, so that the second transmission component 32 has the space to deflect to make up for the above conflict. However, a rotation range of the lifting mechanism for the seat needs to be controlled within a small range, and generally, the rotation range of the lifting mechanism for the seat is no more than 10°.

In other embodiments, the second transmission component 32 can be articulatedly connected to the seat frame 2, which can also make up for the above conflict, and allow for the smooth operation of the four-link mechanism.

Considering that people are often sitting on the seat during a lifting process of the seat, it is also necessary to ensure the stability of the connection between the second transmission component 32 and the seat frame 2. In some embodiments, the lifting mechanism for the seat further includes a connecting rod 4. Both ends of the connecting rod 4 are fixedly connected to the seat frame 2. The second transmission component 32 is fixedly connected to the connecting rod 4. In this way, power to lift the transmission component is evenly distributed to left and right sides of the lifting mechanism for the seat through the connecting rod 4, thus improving the stability of the lifting mechanism for the seat during the rotation.

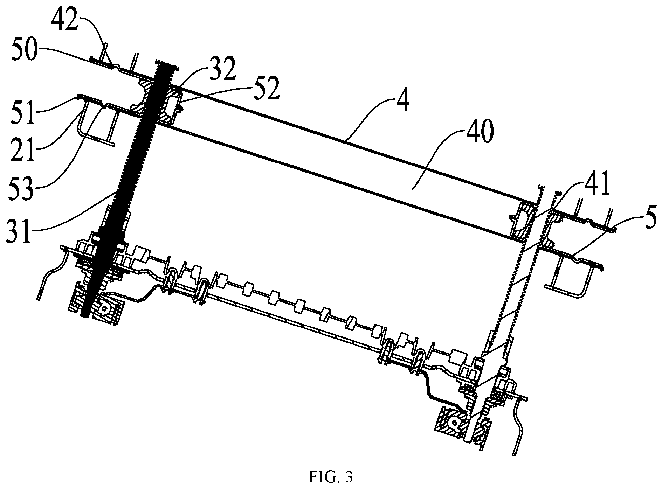

As shown in FIG. 3, as an optional embodiment, the connecting rod 4 includes an installation cavity 40 and an installation hole 41 within the cavity. The installation hole 41 is configured for the first transmission component 31 to pass through the connecting rod 4. The second transmission component 32 is fixedly installed within the installation cavity 40. By placing the second transmission component 32 within the installation cavity 40 inside the connecting rod 4, installation space is saved. At the same time, during the lifting process of the second transmission component 32, directions of forces between the second transmission component 32 and the connecting rod 4 are perpendicular to each other and a torque formed therebetween is small. At the same time, top and bottom ends of the second transmission component 32 are both fixed to the connecting rod 4 by welding, thus improving the stability of the connection between the second transmission component 32 and the connecting rod 4.

Since the second transmission component 32, which is a nut, is located within the installation cavity 40, it is difficult to position and fix the second transmission component 32 within the connecting rod 4. In some embodiments, as shown in FIG. 3, the lifting mechanism for the seat further includes two auxiliary components 5 located within the installation cavity 40 on the left and right sides. Each auxiliary component 5 includes a side wall in contact with the connecting rod 4, a bottom wall 52 connected to the side wall, and a positioning protrusion 53 provided on the side wall. The second transmission component 32 is fixed within the auxiliary component 5 and against the bottom wall 52, to achieve an axial positioning between the second transmission component 32 and the auxiliary component 5. The connecting rod 4 includes a positioning hole 42 matching the positioning protrusion 53, to achieve an axial positioning between the auxiliary component 5 and the connecting rod 4. In this way, when installing the second transmission component 32, the second transmission component 32 is connected with the auxiliary component 5, and then the auxiliary component 5 is placed inside the installation cavity 40, to achieve the installation and fixing of the second transmission component 32.

As an optional embodiment, the side wall includes an upper side wall 50, a lower side wall 51, and a gap between the upper side wall 50 and the lower side wall 51. The gap is designed to enable the upper side wall 50 and the lower side wall 51 to move closer to each other, which in turn ensures that the auxiliary component 5 may not be caught outside of the installation cavity 40 due to the positioning protrusion 53 when the auxiliary component 5 is placed inside the installation cavity 40.

As an optional embodiment, the positioning protrusion 53 and the side wall have a smooth transition therebetween, enabling the auxiliary component 5 to be placed within the installation cavity 40.

Considering that the larger an angle B formed between an extension direction of the backrest frame 21 and an extension direction of the first transmission component 31 is, the smaller the force transmitted from the second transmission component 32 to the seat frame 2 is, in some embodiments, the angle B formed between the extension direction of the backrest frame 21 and the extension direction of the first transmission component 31 is greater than or equal to 0° and less than or equal to 3°. In this way, a good force transfer path between the second transmission component 32 and the seat frame 2 is ensured, thereby reducing the output torque required by the drive motor 30, and ultimately enabling the seat to be driven to rotate with a smaller drive motor 30, thus saving the space inside the vehicle.

In some embodiments, the drive assembly 3 further includes a limiter 33. The limiter 3 is located at an end of the first transmission component 31 to limit a movement distance of the second transmission component 32 on the first transmission component 31. In this way, the rotation of the seat frame 2 is controlled within a smaller range, avoiding a larger tilt of the seating frame 20 of the seat which affects the driver's comfort. The limiter 3 can be a limit block which physically prevents the second transmission component 32 from moving up and down. The limiter 3 can also be a limit switch, where when the second transmission component 32 approaches or contacts the limiter 33, the limiter 33 issues a signal that causes the drive motor 30 to shut down.

After considering the specification and practicing the technical solutions disclosed herein, those skilled in the art will easily think of other embodiments of this disclosure. This disclosure is intended to cover any variations, uses, or adaptive changes of this disclosure that follow the general principles of this disclosure and include common knowledge or conventional technical means in the art that are not disclosed herein. The specification and embodiments are considered exemplary only, and the true scope and spirit of this disclosure are pointed out by the claims below.

It should be understood that this disclosure is not limited to the precise structure already described above and shown in the drawings, and can be modified and changed without departing from its scope. The scope of this disclosure is limited only by the appended claims.

## Claims

1. A lifting mechanism for a seat, comprising:
a fixing frame;
a seat frame, comprising a front end which is rotatably connected to the fixing frame; and
a drive assembly, installed to the fixing frame and configured to drive the seat frame to rotate around the front end.

2. The lifting mechanism for the seat according to claim 1, wherein the seat frame comprises a seating frame and a backrest frame;
the front end is located at an end of the seating frame away from the backrest frame;
the seating frame further comprises a rear end opposite to the front end, the rear end being configured for connecting with the backrest frame; and
the drive assembly is connected to the rear end or the backrest frame.

3. The lifting mechanism for the seat according to claim 2, wherein the seat frame further comprises a rotating shaft located at the front end;
the rotating shaft extends along a width direction of the lifting mechanism for the seat; and
the rotating shaft is fixedly connected to one of the seat frame and the fixing frame, and is rotatably connected to the other of the seat frame and the fixing frame.

4. The lifting mechanism for the seat according to claim 1, wherein the drive assembly comprises a drive motor, a first transmission component, and a second transmission component for connecting with the seat frame;
the second transmission component is disposed around the first transmission component and is drivably connected to the first transmission component; and
the drive motor is installed to the fixing frame and is configured to drive the first transmission component to rotate, such that the second transmission component moves along the first transmission component and drives the seat frame to rotate around the front end.

5. The lifting mechanism for the seat according to claim 4, further comprising a connecting rod;
wherein both ends of the connecting rod are fixedly connected to the seat frame; and
the second transmission component is fixedly connected to the connecting rod.

6. The lifting mechanism for the seat according to claim 5, wherein the lifting mechanism comprises two sets of drive assemblies;
wherein the two sets of drive assemblies are sequentially distributed along a width direction of the lifting mechanism for the seat, and the first transmission components of the two sets of drive assemblies are distributed parallel to each other, and the second transmission components of the two sets of drive assemblies are fixedly connected to the both ends of the connecting rod, respectively.

7. The lifting mechanism for the seat according to claim 5, wherein the first transmission component comprises an external thread, and the second transmission component comprises an internal thread matching the external thread; and
the external thread is in clearance fit with the internal thread to provide a space for the second transmission component to deflect.

8. The lifting mechanism for the seat according to claim 5, wherein the connecting rod comprises an installation cavity and an installation hole within the installation cavity;
the installation hole is configured for the first transmission component to pass through the connecting rod; and
the second transmission component is fixedly installed within the installation cavity.

9. The lifting mechanism for the seat according to claim 8, further comprising an auxiliary component within the installation cavity;
the auxiliary component is fixedly connected to the second transmission component;
the connecting rod comprises a positioning hole; and
the auxiliary component comprises a positioning protrusion matching the positioning hole.

10. The lifting mechanism for the seat according to claim 9, wherein the auxiliary component further comprises side walls in contact with the connecting rod and a bottom wall connected to the side walls;
the second transmission component is located between the side walls and against the bottom wall; and
the positioning protrusion is located on the side walls.

11. The lifting mechanism for the seat according to claim 10, wherein the side walls comprise an upper side wall, a lower side wall, and a gap between the upper side wall and the lower side wall; and
the gap is configured for the upper side wall and the lower side wall to approach each other.

12. The lifting mechanism for the seat according to claim 10, wherein the positioning protrusion and the side walls have a smooth transition therebetween.

13. The lifting mechanism for the seat according to claim 4, wherein the seat frame comprises a backrest frame; and an angle B is formed between an extension direction of the backrest frame and an extension direction of the first transmission component, wherein the angle B is greater than or equal to 0° and less than or equal to 3°.

14. The lifting mechanism for the seat according to claim 4, wherein the drive assembly further comprises a limiter;
the limiter is located at an end of the first transmission component to limit a movement distance of the second transmission component on the first transmission component.

15. A seat, comprising a seating component and a backrest component, wherein the seat further comprises the lifting mechanism for the seat according to any one of claims 1 to 14; and
the seating component and the backrest component cooperate to encase the seat frame.

16. A vehicle, comprising a main body; wherein the vehicle further comprises the seat according to claim 15; and
the seat is installed on the main body.
